# EUROPEAN PATENT APPLICATION

(11) **EP 1 211 786 A1**
(43) Date of publication of application: **05.06.2002**
(21) Application number: 01930029.2
(22) Date of filing: 10.05.2001
(51) Int. Cl.: H02K 21/14

(54) **ELECTRIC MOTOR UTILIZING CONVERGENCE OF MAGNETIC FLUX**

(30) Priority: 12.05.2000 JP 2000139826
(71) Applicant: NIHON RIKEN CO., LTD., Ota-ku, Tokyo 144 (JP); Cosmos Co., Ltd., Ibaraki-shi, Osaka 567-0868 (JP)
(72) Inventor: KAWAI, Teruo, Ota-ku, Tokyo 144-0051 (JP)
(74) Representative: Brown, Kenneth Richard
(86) International application number: JP0103901
(87) International publication number: WO0186786

(57) **Abstract**

The present invention provides an electric motor accomplishing high efficiency and of improved starting characteristics. An electric motor of the first invention comprises a rotor 10 having four radial protrusions 10a provided along an outer periphery of a magnetic disc with equal intervals, and a disc 40 of magnetic circular plate. The rotor 10 and the disc 40 are firmly connected with a rotational shaft 60 as a permanent magnet 20 is interposed therebetween. Around the rotor 10 and the disc 40 are extended twelve bar-shaped electromagnets 30 between the outer peripheries of the rotor 10 and the disc 40. The rotor 10 and the disc 40 are rotatably supported inside the electromagnets 30 and energizing of predetermined electromagnets 30 converges a magnetic flux to the energized electromagnets which was distributed between the respective poles of the permanent magnet 20. As a result, the magnetic flux which locked the rotor 10 in a power off state easily disappears and smooth start is secured. Moreover, magnetic interaction interfering rotation is prevented.

## Description

### Field of the Invention

The present invention relates to an electric motor utilizing a magnetic flux of a permanent magnet, more particularly to an electric motor to accomplish a higher efficiency and a higher torque by converging a magnetic flux only in a direction which is advantageous to generation of a rotational driving force in a magnetic material provided with the permanent magnet.

### Background Art

There have so far been developed various types of electric motors as a system for converting electric energy into a mechanical output such as a torque. In these conventional electric motors, electromagnets are used in either or both the stator or/and the rotor. There are types of motors (such as induction motors) that generate a rotating magnetic field by means of electromagnets, and cause the rotor to follow this magnetic field; and types of motors (such as common, direct current electric motors) having a rotor, whose polarity can be inverted, rotatably disposed in the magnetic field of a permanent magnet stator to obtain a torque by magnetic flux interaction between the rotor and the stator.

There have been made various attempts to enhance the energy conversion efficiency in such conventional electric motors by making use of magnetic fluxes generated from permanent magnets . We inventors have so far tested and developed many different torque generators having various configurations, particularly with the aim of suitably controlling the distribution of the magnetic flux generated by the permanent magnets, in order to reduce the magnetic force working against the output torque as much as possible, and to thereby increase the output torque and improve the efficiency in converting electromagnetic energy into mechanical energy.

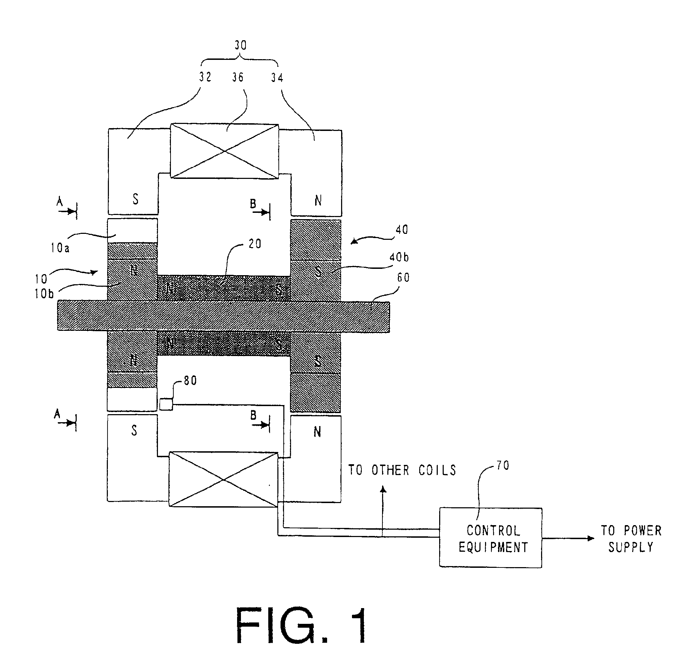

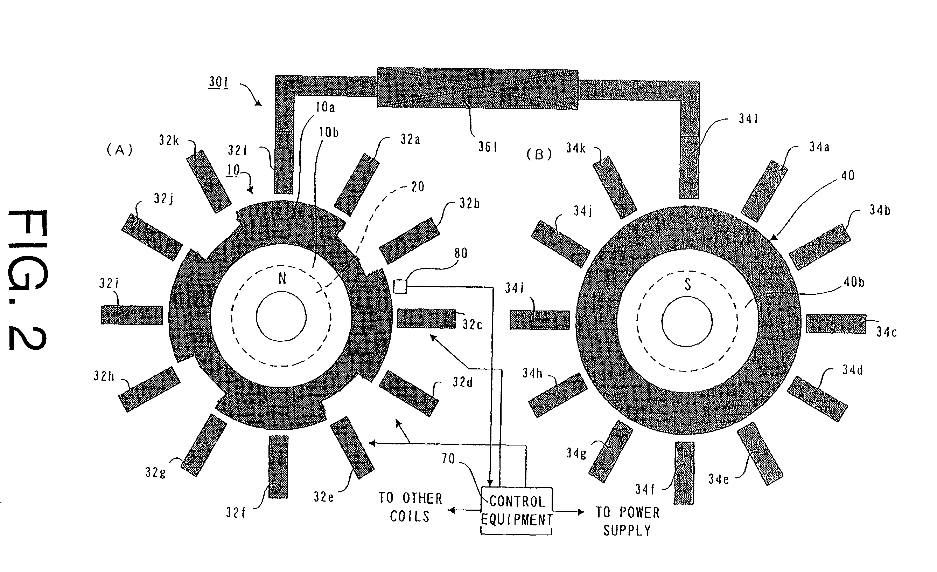

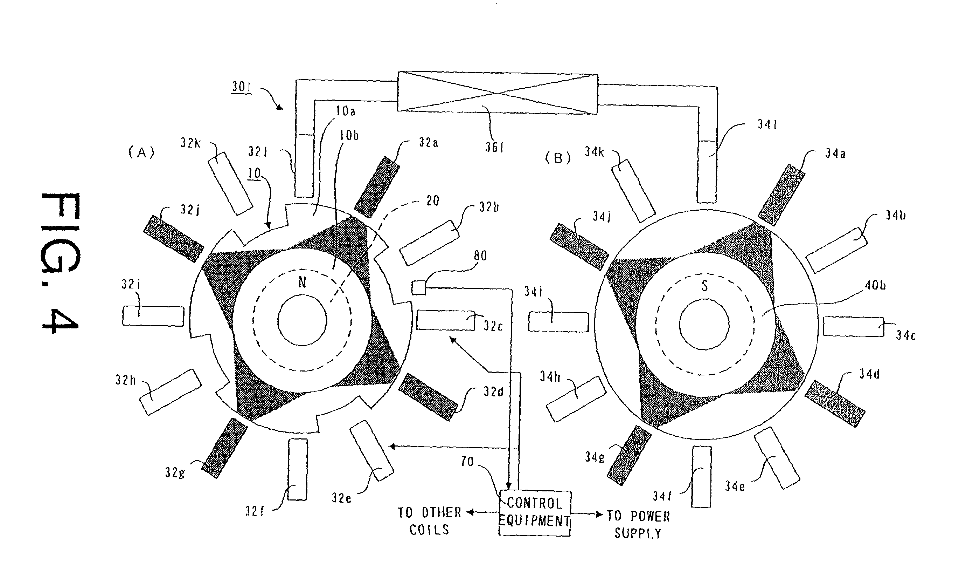

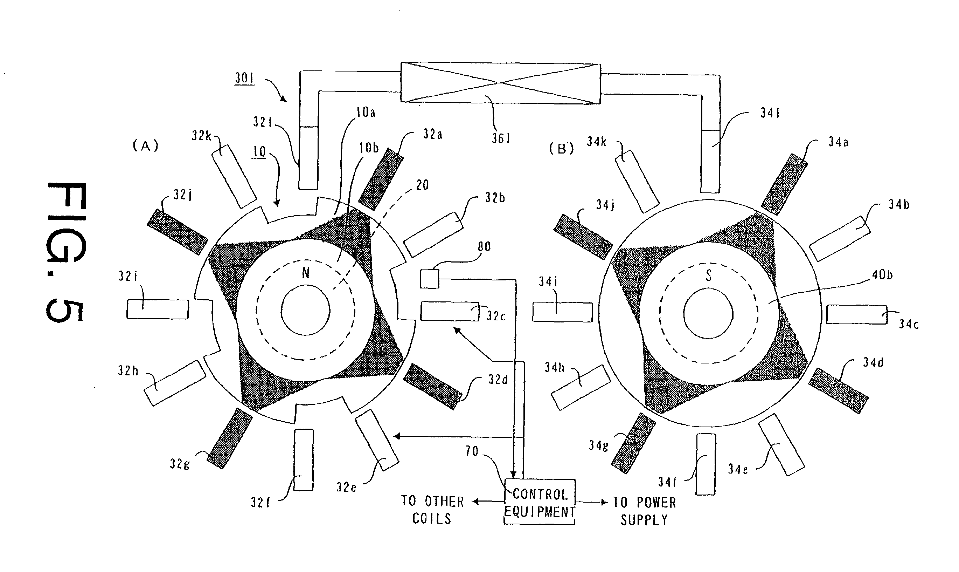

For example, in Japanese Patent Laid-open Publication No. Hei 7-79559 applied by the present inventors, there is proposed a power generating apparatus capable of improving the energy conversion efficiency by adding permanent magnets to the rotor. According to one embodiment of the proposal, as shown in Figs. 1 and 2, a rotational output shaft 11 is rotatably disposed between supporting members 10 via bearings 11a, and at both axial ends of the rotational output shaft 11 are arranged ring-shaped permanent magnets 13 magnetized in an axial direction. Between a side plate 10a of the rotational output shaft 11 and the permanent magnet 13 are disposed magnetic bodies 14 respectively, each having three notches 14a and magnetic teeth 14b alternately. The permanent magnet 13 and the magnetic body 14 are concentric with the rotational output shaft 11 and construct a rotor 12 rotatable with the rotational output shaft 11. According to thus configured power generating apparatus, in a power off state shown in Fig. 4, the electromagnets 16c, 16d, 16g, 16h, 16k, 16l opposing to the magnetic teeth 14b are simple magnetic bodies in a magnetic field by the permanent magnet 13 (See a shaded area in Fig. 4) to attract the magnetic teeth 14b, and the rotor 12 is in a static state. In this condition, when the electromagnets 16a, 16e, 16i positioned at boundaries 14c1, 14c3, 14c5 between the notches 14a and the magnetic teeth 14b as shown in Fig. 5 are energized at the same time, the magnetic fields of the permanent magnet 13 and the electromagnets 16a, 16e, 16i are interact and a magnetic flux 14d through the magnetic body 14 is immediately converged to the electromagnets 16a, 16e, 16i. As a result, the rotor 12 is attracted to the electromagnets 16a, 16e, 16i and subject to a rotational torque clockwise in Fig. 5 in which a width of the magnetic flux 14d is broadened. And a subsequent energizing of the electromagnets 16 positioned in a rotational direction of the magnetic teeth 14b generates a magnetic attractive force by a magnetic flux between the permanent magnet 13 and the electromagnets 16 and maintains continuous rotation of the rotor 12. Furthermore, in this instance, a "blank zone of a magnetic flux" is generated in which a magnetic flux little exists behind each magnetic flux 14d in a rotational direction. Therefore, interaction between the backward non-energized electromagnets and the permanent magnet 13 which will prevent rotation of the rotor 12 is reduced as much as possible.

Moreover, a torque generator disclosed in Japanese Patent Laid-open Publication No. Hei 10-32967 was developed by the present inventor, for the purpose of similar operation and effects. In this apparatus, a plurality of salient poles 22 including a permanent magnet 22a and a salient pole member 22b respectively along the periphery of the rotor core 20. These salient poles 22 are continuously attracted by subsequent energizing of the stator salient poles 12.

Test results in energy conversion efficiency, generated-torque and other performances for various prototypes showed a certain improvement of performance. However, it is likely that convergence of the magnetic flux in the magnetic member does not occur unlike expectation and an efficiency may not be improved sufficiently. This tendency is considered more apparent in the latter torque generator which has a magnetic salient pole member of smaller volume.

Furthermore, since the permanent magnets are incorporated in the rotor, there have been found problems such as that when none of the stator electromagnets are energized, an attraction force sometimes works between each permanent magnet and a nearby stator electromagnet, causing the rotor to be strongly locked and resulting in a difficulty in startup.

The present invention was made so as to solve the above-mentioned problems found in a development process while attention is paid to importance of combining a permanent magnet and a magnetic material in use. One object of the invention is to provide a permanent magnet motor of improved starting characteristics while obtaining higher efficiency and higher torque utilizing magnetic energy of a permanent magnet effectively.

### Disclosure of Invention

In order to achieve the above and other objects, an electric motor of first invention of the present application comprises:
an output member of a plate-shaped magnetic material, provided with at least one radially protruding portion at an outer periphery thereof;
a magnetic flux control member of a magnetic material, disposed in parallel with the output member in a spaced apart relationship;
a plurality of electromagnets disposed substantially between respective outer peripheries of the output member and the magnetic flux control member, one end thereof arranged spaced apart from the outer periphery of the output member, the other end thereof arranged spaced apart from the outer periphery of the magnetic flux control member, the respective ends thereof having a mutual magnetic interaction with the output member and the magnetic flux control member;
a supporting mechanism for supporting at least the output member along an inner periphery of the plurality of electromagnets so that the output member is rotatable in a circumferential direction;
a magnetizing mechanism disposed between the output member and the magnetic flux control member so as to magnetize the output member and the magnetic flux control member in opposite polarities; and
a magnetizing current supply for supplying a magnetizing current to each the electromagnet with a predetermined timing so that each the electromagnet opposed to the outer peripheries of the output member and the magnetic flux control member is magnetized in an opposite polarity at its each end opposing against the outer periphery of the output member with an opposite polarity against a polarity of the output member by the magnetizing mechanism.

An electric motor of second invention of the present application comprises:
a rotor having a pair of movable members disposed spaced apart to and firmly connected to each other, each the movable member formed of a plate-shaped magnetic material and having at least one elevated portion on one side surface thereof in substantially a radial direction for enabling a magnetic flux to converge in a circumferential direction and passing therethrough;
a plurality of electromagnets disposed substantially between respective outer peripheries of the movable members, each end thereof arranged spaced apart from the outer periphery of each the movable member, the respective ends thereof having a mutual magnetic interaction with the movable members;
a supporting mechanism for supporting the rotor along an inner periphery of the plurality of electromagnets so that the rotor is rotatable in a circumferential direction;
a magnetizing mechanism disposed between the movable members so as to magnetize the movable members in opposite polarities; and
a magnetizing current supply for supplying a magnetizing current to each the electromagnet with a predetermined timing so that each the electromagnet opposed to the outer peripheries of the movable members is magnetized in an opposite polarity at its each end opposing against the outer periphery of the movable member with an opposite polarity against a polarity of the movable member by the magnetizing mechanism.

The magnetizing mechanism may comprise a permanent magnet or an electromagnet which is capable of regulating its magnetic magnitude.

In the first invention, each other end of the electromagnet may be connected to the magnetic flux control member.

In the above inventions, each of the electromagnets may be successively energized so as to consecutively attract each protrusion arranged at the outer periphery of the output member or each elevated portion arranged at the outer periphery of the movable member.

According to the electric motor of the first invention of the present application thus constructed, in a condition that none of the electromagnets is energized, a magnetic flux from the magnetizing mechanism is distributed along a path as follows:
(one magnetic pole of the magnetizing mechanism) -> (Protrusion of the output member) -> (non-energized electromagnet as a simple magnetic material) -> (Magnetic flux control member made of magnetic material) -> (Another magnetic pole of the magnetizing mechanism)
In this state, each protrusion of the output member is attracted to either of the non-energized electromagnets and is unable tomove. However, when either of the electromagnets is energized by supply of current from the magnetizing current supply, the magnetic flux distributed in a magnetic material of the magnetic flux control member in a substantially uniform manner between the non-energized electromagnets and the predetermined magnetic pole of the magnetizing mechanism is sufficiently converged to respective regions raging between the energized electromagnets and the magnetizing mechanism in the magnetic flux control member. Thus, restrained condition between the output member and the electromagnets in a power off state can be removed. Successive on/off change of the electromagnets in a rotating direction according to rotation of the output member enables the output member to rotate continuously. In other words , in the present invention, when a predetermined electromagnet is supplied with an electric current to be energized, the above-mentioned converge of the magnetic flux is brought about in the magnetic flux control member. This results in substantial disappearing of effect of the magnetic flux to the non-energized electromagnets and the magnetic flux is concentrated to the electromagnet which is beginning to generate a driving force. Briefly speaking, the magnetic flux control member regulates distribution of the magnetic flux which is to prevent generation of the driving force and also prepares a condition of the magnetic flux which is able to contribute to the driving force.

Furthermore, the magnetizing member is disposed between the output member and the magnetic flux control member and a magnetic flux generated from the magnetizing member is utilized together with the magnetic flux from the energized electromagnets, thus a required power input can be reduced significantly comparing to conventional equipments of an equivalent rotational torque.

According to the electric motor of the second invention of the present application, in a condition that none of the electromagnets is energized, a magnetic flux from the magnetizing mechanism is distributed along a path as follows, since the elevated portion formed on each movable member primarily functions as a magnetic path:
(one magnetic pole of the magnetizing mechanism) -> (Elevated portion formed on one movable member) -> (non-energized electromagnet as a simple magnetic material) -> (Elevated portion formed on another movable member) -> (Another magnetic pole of the magnetizing mechanism)
In this state, each elevated portion of the movable members is attracted to either of the non-energized electromagnets and is unable to move. However, when either of the electromagnets is energized by supply of current from the magnetizing current supply, the magnetic flux distributed mainly in a magnetic material of the elevated portion of the movable members between the non-energized electromagnets and the predetermined magnetic pole of the magnetizing mechanism is sufficiently converged to respective regions in the magnetic material of the movable members ranging between the energized electromagnets and the magnetizing mechanism. Thus, restrained condition between the elevated portions of the movable members and the electromagnets in a power off state can be removed. Successive on/off change of the electromagnets in a rotating direction according to rotation of the movable members and the rotor as a combination thereof enables the output member to rotate continuously. In the present invention, the both movable members thus assembled is able to generate rotational torque, further improvement in efficiency is accomplished than in the first invention.

### Brief Description of Drawings

Fig. 1 is a cross-sectional view showing a structure of an electric motor according to one embodiment of the first invention;
Fig. 2 is a first figure showing an operation of an electric motor according to one embodiment of the first invention;
Fig. 3 is a second figure showing an operation of an electric motor according to one embodiment of the first invention;
Fig. 4 is a third figure showing an operation of an electric motor according to one embodiment of the first invention;
Fig. 5 is a fourth figure showing an operation of an electric motor according to one embodiment of the first invention;
Fig. 6 is a fifth figure showing an operation of an electric motor according to one embodiment of the first invention;
Fig. 7 is a cross-sectional view showing a structure of an electric motor according to one embodiment of the second invention;
Fig. 8 is a schematic view of a recessed rotor used in an electric motor according to one embodiment of the second invention;
Fig. 9 is a first figure showing an operation of an electric motor according to one embodiment of the second invention;
Fig. 10 is a second figure showing an operation of an electric motor according to one embodiment of the second invention;
Fig. 11 is a third figure showing an operation of an electric motor according to one embodiment of the second invention; and
Fig. 12 is a fourth figure showing an operation of an electric motor according to one embodiment of the second invention.

### Best Mode for Carrying Out the Invention

A detailed description of one embodiment of the present invention referring to the attached drawings.

Fig. 1 is a cross-sectional view schematically showing a construction of an electric motor according to one embodiment of the first invention of the application. In this figure, for the purpose of clear presentation of a basic construction and operation of the apparatus, such portions as a housing and frame are omitted which are considered not essential to describing the present invention.

As shown in Fig. 1, the electric motor of the present embodiment is mainly comprised of a rotor 10 as an output member, a permanent magnet 20 as a magnetizing mechanism, a plurality of electromagnets 30, and a disc 40 as a magnetic flux control member capable of magnetic interaction mutually with one ends of the electromagnets 30. The rotor 10 is a member of a magnetic material shaped in a substantially circular plate. Four radial protrusions 10a of center angle of 60 degrees are provided along an outer periphery of the rotor 10 with equal intervals. The disc 40 is formed with a magnetic material of a simple circular plate. The rotor 10 and the disc 40 is firmly connected with a rotational shaft 60 as a supporting mechanism.

A plurality of electromagnets 30 are extended between the outer peripheries of the rotor 10 and the disc 40 with predetermined intervals. Each electromagnet 30 includes a core of a substantially bar shape and a energizing coil 36 wound around an outer side periphery thereof. One end 32 of the core and another end 34 of the core are placed in the proximity of the outer peripheries of the rotor 10 and the disc 40 as opposing thereto respectively. In the present embodiment, as mentioned regarding an operation thereof later, twelve electromagnets 30 are disposed around the rotor 10 and the disc 40 at 30 degrees intervals. The above-mentioned rotational shaft 60 is supported by bearings (not shown) so that the rotor 10 and the disc 40 is rotatable inside the electromagnets 30 disposed in a ring shape.

In this case, each electromagnet 30 may be disposed in the proximity of the rotor 10 and the disc 40 so that a continuous magnetic circuit is defined therebetween. Therefore, it is possible to employ such a structure that the core of each electromagnet 30 and the disc 40 is fixedly connected. Needless to say, for employing such a structure, the disc 40 should be rotatable relative to the rotational shaft 60 through a known configuration.

The permanent magnet 20 is disposed between the disc 40 and the rotor 10. The permanent magnet 20 has substantially a cylindrical shape and placed concentrical with the rotor 10 and the disc 40 substantially. In the present embodiment, the permanent magnet 20 is secured so as to be positioned substantially concentrical with a center axis of the disc 40 of a circular plate while S pole of the magnet 20 is at the disc 40 side. At N pole side of the magnet 20 is disposed the rotor 10. While respective ends of the magnet 20 is attached to a boss 10b of the rotor 10 and a boss 40b of the disc 40, each made of a magnetic material as separate parts in the present embodiment, it is possible to construct the permanent magnet 20 and the respective boss 10b and 40b as one integral permanent magnet having a bobbin shape.

A control equipment 70 is connected to an appropriate power supply to supply subsequently an energizing output current to the respective coils 36 of the twelve electromagnets 30, and typically comprises current switching apparatuses or devices such as a relay, transistor, or thyristor and a control circuit for controlling on/off operation of the switching devices or the like. Through the control equipment 70, a current from the power supply is suitably rectified and supplied to each coil 36 as a signal of a predetermined output frequency and output current. In the electric motor of the present invention, the rotor 10 is basically driven synchronously with the subsequent energizing control of each electromagnet 30, thus an open loop configuration may be employed with respect to a driving control. However, it is also possible to control a rotational speed of the rotor 10 using appropriate known sensors such as an optical sensor or a rotary encoder combined with a light shield plate (not shown) having a notch of a predetermined shape so as to detect a rotational angle of the rotor 10. In the present embodiment, a rotation sensor 80 is provided for detecting the rotational angle of the rotor 10, and an output signal of the sensor 80 is inputted to the control circuit of the control equipment 70 to be utilized as a trigger signal for an on/off control of the current switching devices or the like, for example, according to a rotational angle of the rotor 10.

Next, an operation of the electric motor of the above construction according to one embodiment of the invention will be described with referring to Figs. 2 to 6.

First, Fig. 2 shows a power off state, in which either of the coils 36 of the electromagnets 30 is not supplied with an energizing current from the control equipment 70 , thus none of the electromagnets 30 is energized. In this state, an N pole of the permanent magnet 20 applies a magnetic attraction force to the one ends 32a, 32c, 32d, 32f, 32g, 32i, 32j, and 32l of the respective opposing electromagnets 30 via the respective protrusions 10a of the rotor 10. Therefore, each protrusion 10a is simply attracted outwardly in a radial direction. With respect to the rotational shaft 60 fixedly penetrating a center of the rotor 10, forces outwardly attracting the respective rotor protrusions 10a are substantially balanced and the protrusions 10a are, in other words, locked by the respective ends 32 of the opposing electromagnets 30. This is due to distribution of a magnetic flux along the following path, including the disc 40: (N pole of permanent magnet 20) -> (Rotor protrusion 10a) -> (One end 32 of electromagnet 30) -> (Other end 34 of electromagnet 30) -> (Disc 40) -> (S pole of permanent magnet 20) An attracting force by this magnetic flux affects to the respective rotor protrusions 10a to be locked against the electromagnets 30.

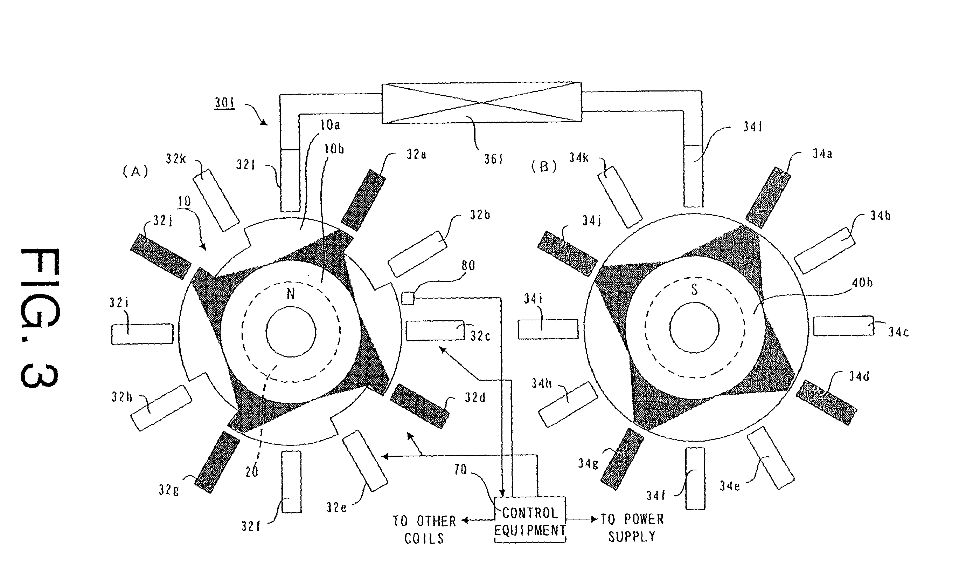

Next, as shown in Fig. 3, the electromagnets 30a, 30d, 30g, 32j among the twelve electromagnets 30 arranged with equal intervals, are supplied with an electric current from the control equipment 70 to magnetize the ends 32a, 32d, 32g, 32j at the rotor 10 side in an S pole. In this instance, the magnetic flux extended from the N pole of the permanent magnet 20 through the electromagnets 30a, 30c, 30d, 30f, 30g, 30i, 30j, 30l in a non-energizing state in Fig. 2 is converged to the electromagnets 30a, 30d, 30g, 30j magnetized in an opposite polarity and the rotor 10 is subject to a rotational torque clockwise by the above magnetic attractive force.

In this state, behavior of a magnetic flux in the disc 40 plays an important role so as to improve a starting characteristics of the rotor 10. That is, in a non-energizing state of Fig. 2, a magnetic flux entering into the S pole of the permanent magnet 20 was distributed through the electromagnets 30a, 30c, 30d, 30f, 30g, 30i, 30j, 30l to lock the protrusions 10a of the rotor 10. However, as shown in Fig. 3, when the electromagnets 30a, 30d, 30g, 30j are energized by supply of an electric current, the magnetic flux which was entering into the S pole of the permanent magnet 20 is converged to the other ends 34a, 34d, 34g, 34j of the above electromagnets. Then the magnetic flux disappears which was distributed between the rotor 10 and the N pole of the permanent magnet 20 via the electromagnets 30c, 30f, 30i, 30l to lock the rotor 10 by this time. As a result, lock of the rotor 10 illustrated in Fig. 2 is completely released when the electromagnets 30a, 30d, 30g, 30j are energized. Therefore, the rotor 10 is allowed to start smooth rotating by the rotational torque acting clockwise immediately after the above electromagnets are energized.

Figs. 4 and 5 show rotational drive of the rotor 10 subsequent to Fig. 3 by an effect of a rotational torque due to a magnetic attractive force in a clockwise direction. In this situation, convergence of the magnetic flux in the disc 40 occurs between the S pole of the permanent magnet 20 and the other ends 34a, 34d, 34g, 34j as in Fig. 3, thus the respective protrusions 10a of the rotor 10 are subject only to a magnetic attractive force from the other ends 32a, 32d, 32g, 32j of the energized electromagnets arranged forwardly in a rotational direction and no magnetic interaction between the rotor 10 and other non-energized electromagnets 32c and so on exists which will prevent rotation of the rotor 10. In other words, inside the magnetic material of the rotor 10 opposing to the ends 32, 34 of non-energized electromagnets is formed a "blank portion" (an illustrated area except a shaded portion in the rotor 10) in which substantially no magnetic flux exists. Because of the above described operation, improvement of an efficiency is accomplished as well as improvement of a starting characteristics.

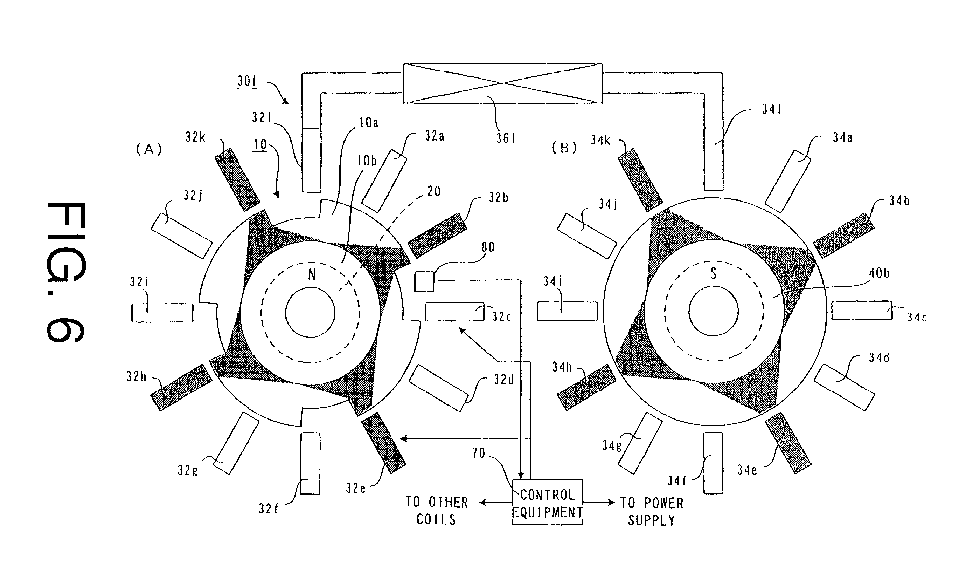

As shown in Fig. 6, when forward peripheries of the protrusions 10a of the rotor 10 with respect to a rotational direction have reached respective positions in the proximity of non-energized electromagnets 32b, 32e, 32h, 32k forwardly adjacent to the respective energized electromagnets in a rotational direction, current supply to the electromagnets 30a, 30d, 30g, 30j which were energized are stopped and the adjacent electromagnets 30b, 30e, 30h, 30k which were non-energized are supplied with an electric current to be energized. This situation is considered equivalent to an initial starting state shown in Fig. 3. Each rotor protrusion 10a is magnetically attracted by a magnetic flux converging between the ends 32b, 32e, 32h, 32k of the energized electromagnets arranged forwardly in a clockwise direction and the S pole of the permanent magnet 20, and continuously generates a clockwise rotational torque. At this time, as explained referring to Figs . 3 to 5, the magnetic flux in the disc 40 is converged between the S pole of the permanent magnet 20 and the other ends 34b, 34e, 34h, 34k of the newly energized electromagnets, and the magnetic flux extended to the electromagnets 30a, 30d, 30g, 30j which are now extinct disappears. Subsequently, supply of an energizing electric current to the respective electromagnets 30 from the control equipment 70 in the above-mentioned steps enables continuous generation of a rotational torque by the rotor 10.

Next, an embodiment will be explained for implementing the second invention of the application.

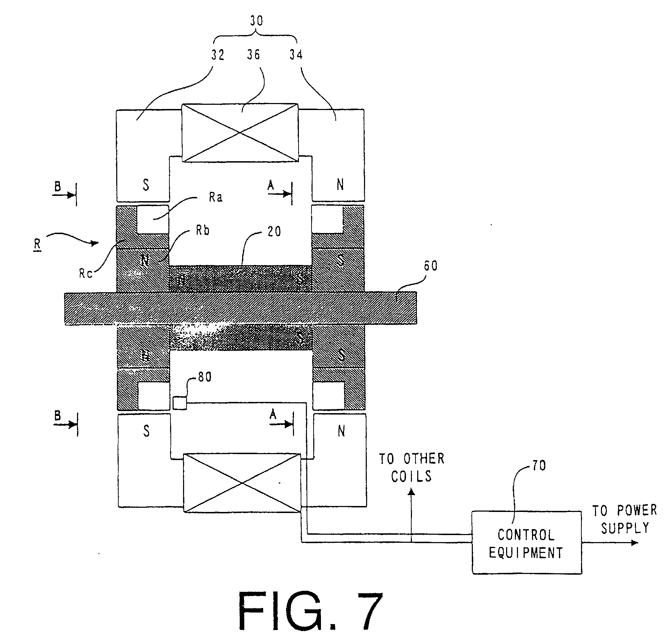

Fig. 7 is a schematic cross-section showing a general configuration of an electric motor according to one embodiment of the second invention, corresponding to Fig. 1 in the first embodiment. Similarly, for the purpose of clear presentation of a basic construction and operation of the apparatus, such portions as a housing and frame are omitted which are considered not essential to describing the present invention.

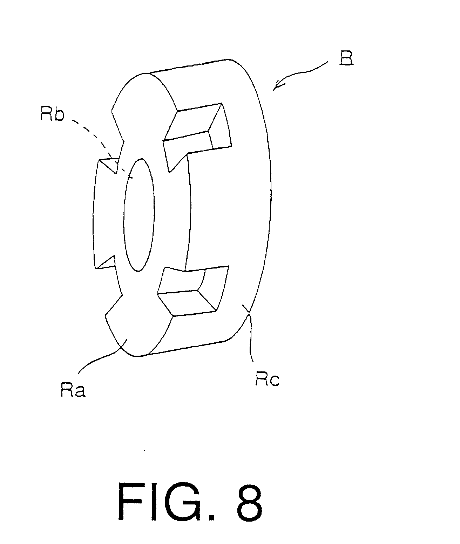

Different from the apparatus of the first embodiment, the electric motor of the second embodiment in Fig. 7 is provided with a recessed rotor R as a movable member instead of the rotor 10 and the disc 40. A perspective view of the single recessed rotor R is shown in Fig. 8. As appreciated from Fig. 8, the recessed rotor R is shaped so that the rotor 10 and the disc 40 in the first embodiment are integrally attached. That is, the recessed rotor R is formed generally as a substantially circular plate of a magnetic material, and a portion of half thick as the thickness of the rotor R is cut out in a predetermined shape. This results in that four elevated portions Ra having a central angle of 60 degrees in a radial direction are disposed along an outer periphery of the rotor R in equal intervals. A portion of an approximately half thickness at a side on which the elevation Ra is not provided is formed as a circular plate Rc of a magnetic material (corresponding to a "magnetic flux control member" in the first invention). It should be noted that a boss Rb is a portion connecting each recessed rotor R to the rotational shaft 60 as described in which a circular plate member of smaller diameter is separately inserted in the present embodiment. However, it should not be taken as limitative. For example, as described in the first embodiment, the permanent magnet 20 and each boss Rb may be integrally combined as one body bobbin-shaped permanent magnet.

In the present embodiment, as shown in Fig. 7, a set of recessed rotors R are disposed in parallel so that the elevations Ra are opposed to each other and then connected to each other with the rotational shaft 60 as a supporting member to form a rotor RR as a rotor member. However, a direction of the elevations Ra when combining the rotor R should not be limitative to the construction of the present embodiment. Arrangement of the substantially cylindrical permanent magnet 20 between the parallel disposed recessed rotor R, and a plurality of electromagnets 30 extended between the outer peripheries of the recessed rotors R are substantially the same as in the first embodiment. Moreover, configurations of the control equipment 70 subsequently supplying an energizing current to the electromagnets 30, and the rotation sensor 80 for controlling rotation of the rotor RR are also substantially the same as in the first embodiment. Thus, a detailed description of the above configurations are omitted.

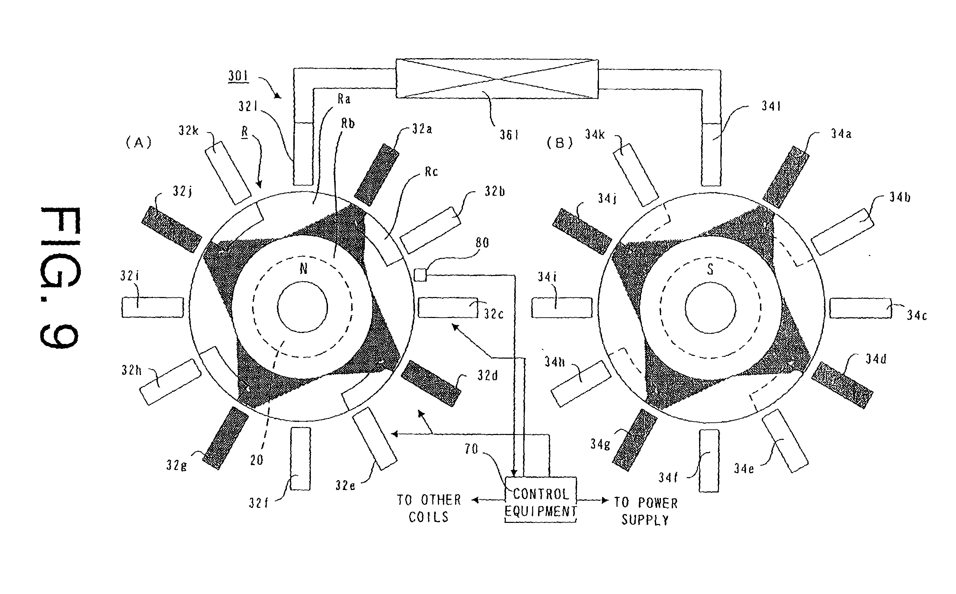

Next, operation of the electric motor according to the second embodiment of the present invention including the above configurations is described with referring to Figs. 9 to 12.

In a power off state (corresponding to Fig. 2 in the first embodiment, not shown), four electromagnets 30a, 30d, 30g, 30j arranged with equal intervals among twelve electromagnets 30 are supplied with an electric current from the control equipment 70 so that ends 32a, 32d, 32g, 32j at the one recessed rotor R side are magnetized in an S pole, and ends 34a, 34d, 34g, 34j at the other recessed rotor R side are magnetized in an N pole. In this embodiment, unlike the first embodiment, convergence of a magnetic flux between the respective poles of the permanent magnet 20 occurs via the elevations Ra in the both recessed rotors R, and the both rotors R is able to contribute to a rotational torque generation of the rotor RR.

On the other hand, in the present embodiment, behavior of a magnetic flux in the circular plate Rc of each recessed rotor R plays an important role so as to improve a starting characteristics of the rotor RR as in the disc 40 of the first embodiment. That is, in a non-energizing state, a magnetic flux distributed through the elevations Ra of the respective recessed rotors R and the electromagnets opposed thereto respectively locks the elevations Ra of the rotors R and interferes a smooth starting thereof. However, as shown in Fig. 9, when the electromagnets 30a, 30d, 30g, 30j are energized by supply of an electric current, the magnetic flux which was entering into the respective poles of the permanent magnet 20 is converged to the respective ends 32a, 32d, 32g, 32j, 34a, 34d, 34g, 34j of the above energized electromagnets. Then the magnetic flux disappears which was distributed to lock the elevations Ra by this time. As a result, lock of the rotor RR is completely released. Therefore, as in the first embodiment, the recessed rotors R and the rotor RR are allowed to start smooth rotating by the rotational torque acting clockwise immediately on the protrusion Ra of each recessed rotor R after the above electromagnets 30a, 30d, 30g, 30j are energized.

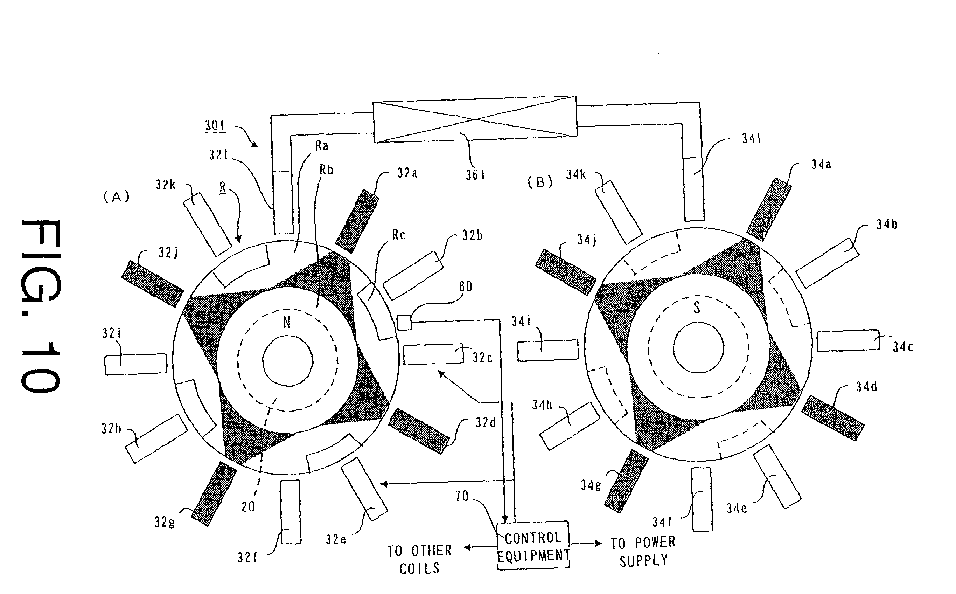

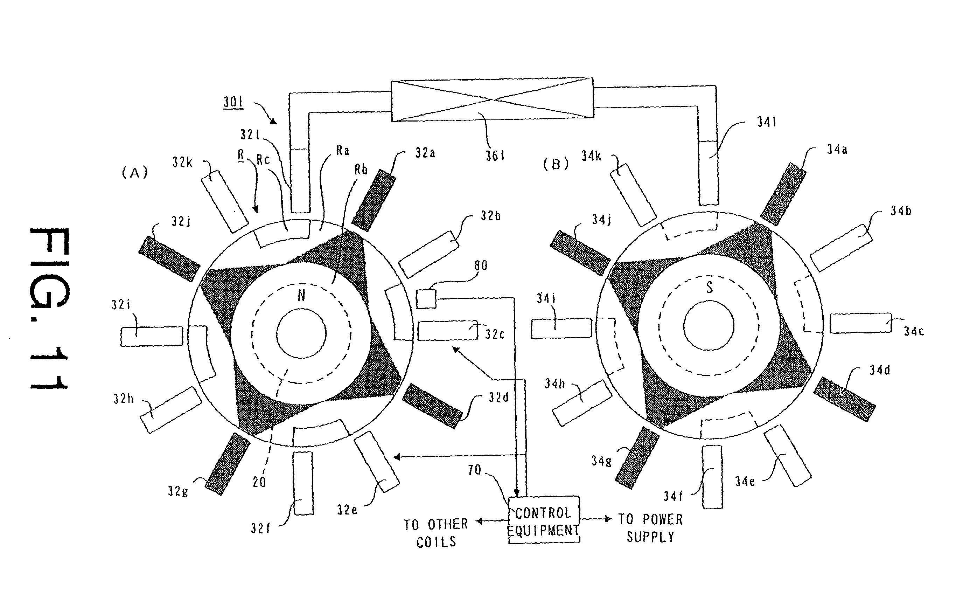

Figs. 10 and 11 show rotational drive of each recessed rotor R subsequent to Fig. 9 by an effect of a rotational torque due to a magnetic attractive force in a clockwise direction by the energized electromagnets. In this situation, convergence of the magnetic flux in the circular plate Rc of each recessed rotor R is the same as in Fig. 9, thus the respective elevations Ra of the recessed rotor R are subject only to a magnetic attractive force from the respective ends 32a, 32d, 32g, 32j, 34a, 34d, 34g, 34j of the energized electromagnets arranged forwardly in a rotational direction and no magnetic interaction with the other non-energized electromagnets 30c and so on exists which will prevent rotation of the recessed rotor R. Because of the above, further improvement of an efficiency is accomplished as in the first embodiment as well as improvement of a starting characteristics.

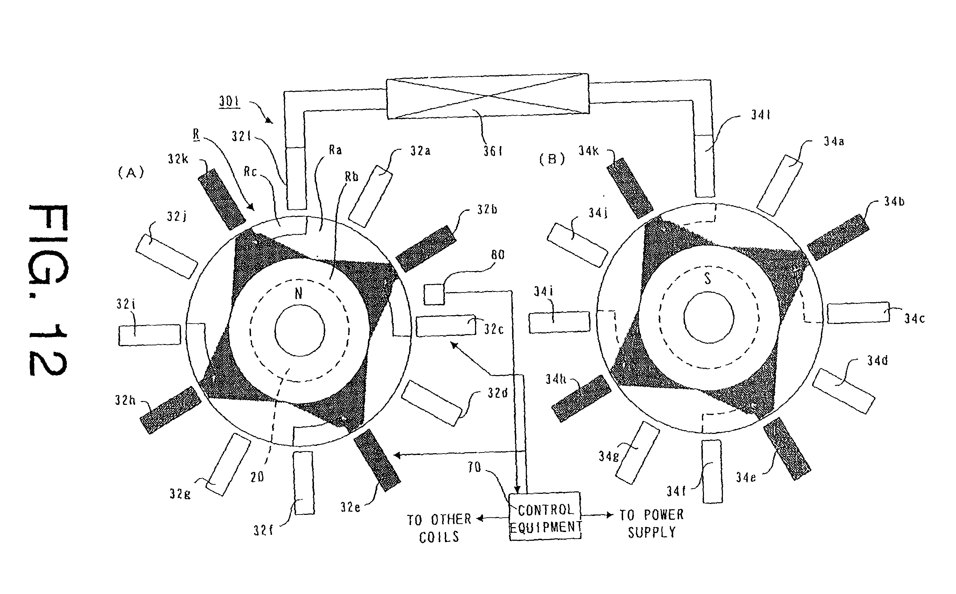

Further, so as to cause the rotor RR to generate a continuous rotational torque, as shown in Fig. 12, current supply to the electromagnets 30a, 30d, 30g, 30j which were energized are stopped and the forwardly adjacent electromagnets 30b, 30e, 30h, 30k in a rotational direction which were non-energized are supplied with an electric current to be energized. This situation is considered equivalent to an initial starting state shown in Fig. 9. At this time, as explained referring to Figs. 9 to 11, the magnetic flux in the circular plate Rc of each recessed rotor R is converged between each pole of the permanent magnet 20 and the newly energized electromagnets 30b, 30e, 30h, 30k, and the magnetic flux extended to the electromagnets 30a, 30d, 30g, 30j which is now extinct disappears. Subsequently, supply of an energizing electric current to the respective electromagnets 30 from the control equipment 70 in the above-mentioned steps enables continuous generation of a rotational torque by the recessed rotor R and the rotor RR.

In the above-mentioned first and second embodiments of the present invention, in case of rotational speed control of the rotor 10 or the rotor RR, a timing of change of the energizing current to the respective electromagnets 30 are defined by the number of electromagnets 30 disposed annularly around the rotor 10 or the recessed rotor R, i.e., the number n of the poles of the stator, and the change should bemade every (360/n) degrees. In the present embodiment, since the number n of the poles of the stator is 12, thus energizing of the electromagnets 30 to be energized is changed every thirty degrees, i.e., (360/12). The change direction of the electromagnets 30 to be energized may be determined according to a desired rotational direction.

In the above description, an energizing current is changed when a forward periphery of the protrusion 10a of the rotor 10 or the elevation Ra of the recessed rotor R. However, more precisely, in addition to increase of an output torque and increase of an efficiency in energy conversion, it is possible to find an optimal timing of the energizing current change considering other conditions such as suppression of torque fluctuation by employing such a method of sequential analysis of a change in a magnetic flux distribution as the rotor 10 or the recessed rotor R rotates using a finite element method, or measurement and comparison of an output characteristics by depicting a energizing change timing to the electromagnets 30 as a parameter. And a setting of the sensor may be regulated so that an output signal from the rotational sensor 80 for detecting a rotational angle of the rotor 10 or the recessed rotor R.

### Industrial Applicability

As described in detail above, according to the electric motor of the present invention of the above configuration, the output member and the movable member restrained by a magnetic flux distributed between the respective magnetic poles of the magnetizing member via the electromagnets opposing to the protruded portions of the output member or the movable member in a power off state are released by convergence of the magnetic flux to the newly energized electromagnets via the magnetic flux control member or the circular plate of the movable member. Thus, the output member and the movable member are able to start rotating smoothly by the magnetic attractive force by the energized electromagnets.

Furthermore, an output efficiency is improved since the output member and the movable member are subject to a magnetic attractive force mainly from the energized electromagnets and a magnetic force preventing a rotation is not applied by the other non-energized electromagnets due to the convergence of the magnetic flux.

## Claims

1. An electric motor comprising:
an output member of a plate-shaped magnetic material, provided with at least one radially protruding portion at an outer periphery thereof;
a magnetic flux control member of a magnetic material, disposed in parallel with the output member in a spaced apart relationship;
a plurality of electromagnets disposed substantially between respective outer peripheries of said output member and said magnetic flux control member, one end thereof arranged spaced apart from the outer periphery of said output member, the other end thereof arranged spaced apart from the outer periphery of said magnetic flux control member, said respective ends thereof having a mutual magnetic interaction with said output member and said magnetic flux control member;
a supporting mechanism for supporting at least said output member along an inner periphery of said plurality of electromagnets so that said output member is rotatable in a circumferential direction;
a magnetizing mechanism disposed between said output member and said magnetic flux control member so as to magnetize said output member and said magnetic flux control member in opposite polarities; and
a magnetizing current supply for supplying a magnetizing current to each said electromagnet with a predetermined timing so that each said electromagnet opposed to the outer peripheries of said output member and said magnetic flux control member is magnetized in an opposite polarity at its each end opposing against the outer periphery of said output member with an opposite polarity against a polarity of said output member by said magnetizing mechanism.

2. An electric motor comprising:
a rotor having a pair of movable members disposed spaced apart to and firmly connected to each other, each said movable member formed of a plate-shaped magnetic material and having at least one elevated portion on one side surface thereof in substantially a radial direction for enabling a magnetic flux to converge in a circumferential direction and passing therethrough;
a plurality of electromagnets disposed substantially between respective outer peripheries of said movable members, each end thereof arranged spaced apart from the outer periphery of each said movable member, said respective ends thereof having a mutual magnetic interaction with said movable members;
a supporting mechanism for supporting said rotor along an inner periphery of said plurality of electromagnets so that said rotor is rotatable in a circumferential direction;
a magnetizing mechanism disposed between said movable members so as to magnetize said movable members in opposite polarities; and
a magnetizing current supply for supplying a magnetizing current to each said electromagnet with a predetermined timing so that each said electromagnet opposed to the outer peripheries of said movable members is magnetized in an opposite polarity at its each end opposing against the outer periphery of said movable member with an opposite polarity against a polarity of said movable member by said magnetizing mechanism.

3. An electric motor claimed in claim 1 or 2 wherein said magnetizing mechanism comprises a permanent magnet.

4. An electric motor claimed in claim 1 or 2 wherein said magnetizing mechanism comprises an electromagnet which is capable of regulating its magnetic magnitude.

5. An electric motor claimed in claim1 each other end of said electromagnet is connected to said magnetic flux control member.

6. An electric motor claimed in claim 1 wherein each said electromagnet is energized so as to consecutively attract each protrusion arranged at the outer periphery of said output member.

7. An electric motor claimed in claim 2 wherein each said electromagnet is energized so as to consecutively attract each said elevated portion arranged at the outer periphery of said movable member.
